# EUROPEAN PATENT SPECIFICATION

(11) **EP 1 851 272 B1**
(45) Date of publication and mention of the grant of the patent: **13.08.2008**
(21) Application number: 06735277.3
(22) Date of filing: 14.02.2006
(51) Int. Cl.: C08L 5/08, C08J 7/04, C09D 5/14

(54) **ANTIMICROBIAL FLUOROPOLYMER FILM, LAMINATES AND ARTICLES AND PROCESS FOR MAKING THEREOF**
ANTIMIKROBIELLE FLUORPOLYMERFOLIE, -BESCHICHTUNGEN UND -ARTIKEL SOWIE HERSTELLUNGSVERFAHREN DAFÜR
FILM, LAMELLE ET ARTICLES EN FLUOROPOLYMERE ANTIMICROBIEN, PROCEDE DE PRODUCTION DE CES DERNIERS

(30) Priority: 16.02.2005 US 653341 P
(43) Date of publication of application: 07.11.2007
(73) Proprietor: E.I. DU PONT DE NEMOURS AND COMPANY, Wilmington DE 19898 (US)
(72) Inventor: DEBERGALIS, Michael, East Amherst, New York 14051 (US); SABESAN, Subramaniam, Wilmington, Delaware 19810 (US)
(74) Representative: Matthews, Derek Peter
(86) International application number: PCT/US2006/005527
(87) International publication number: WO 2006/089059

(56) References cited:
- GB-A- 2 402 882

## Description

### FIELD OF THE INVENTION

This invention relates to antimicrobial fluoropolymer film structures and laminated articles.

### TECHNICAL BACKGROUND OF THE INVENTION

This invention relates to a process for making a fluoropolymer film antimicrobial, comprising contacting a chitosan solution with the activated surface of the fluoropolymer film.

There is clearly a demand for materials and/or processes that reduce the number of microbes, i.e., bacteria, viruses and fungi, encountered in the environment by inhibiting their growth or by killing them. In particular, the closed confines of aircraft interiors require effective means for accomplishing this goal.

Fluoropolymer films have long been used as a protective and decorative overlay for a variety of substances such as metal, wood, and thermoplastic and thermoset polymers. With its excellent chemical resistance and weathering properties, a thin layer of fluoropolymer film is often used to protect less durable substances from damage in both interior and exterior contexts. Fluoropolymer film is widely used in aircraft interiors, for example, for interior ceiling and sidewall decorative panels, window shades, stow bins, lavatories, galleys, ceiling panels, and bulkhead partitions. Adding antimicrobial functionality to fluoropolymer film in these contexts would improve overall air quality in aircraft cabins by reducing microbial load in the aircraft interior.

Chitosan is the commonly used name for poly-[1-4]-β-D-glucosamine. Chitosan is chemically derived from chitin, which is a poly-[1-4]-β-N-acetyl-D-glucosamine, which, in turn, is derived from the cell walls of fungi, the shells of insects and, especially, crustaceans. Thus, it is inexpensively derived from widely available materials. It is available as an article of commerce from, for example, Biopolymer Engineering, Inc. (St. Paul, MN); Biopolymer Technologies, Inc. (Westborough, MA); and CarboMer, Inc. (Westborough, MA).

Chitosan can be treated with metal salt solutions so that the metal ion forms a complex with the chitosan. Chitosan and chitosan-metal compounds are known to provide antimicrobial activity as bacteriocides and fungicides. See, e.g., T. L. Vigo, "Antimicrobial Polymers and Fibers: Retrospective and Prospective," in Bioactive Fibers and Polymers, J. V. Edwards and T. L. Vigo, eds., ACS Symposium Series 792, pp. 175-200, American Chemical Society, 2001. Chitosan is also known to impart antiviral activity, though the mechanism is not yet well understood. See, e.g., Chirkov, S. N., Applied Biochemistry and Microbiology (Translation of Prikladnaya Biokhimiya i Mikrobiologiya) (2002), 38(1), 1-8. Additionally, chitosan is known to impart antiodor properties; see, for example, International App. Pub. No. WO 1999061079.

Antimicrobial fluoropolymer materials treated with chitosan are disclosed in U. S. Pat. App. No. 10/919844. The fluoropolymers therein already contain amino-reactive functional groups as polymerized (for example, a fluoropolymer copolymerized with a maleic anhydride graft monomer, or a perfluorinated ionomer with metal ions) that can react with the chitosan amine groups. However, fluoropolymers copolymerized with a graft monomer that can react directly with chitosan amino groups are not commercially available.

In addition, the synthesis of such copolymers requires conditions that do not lend themselves to incorporation in a continuous process that includes the chitosan treatment step. Perfluorinated ionomers by their nature retain a great deal of water and are used primarily as components of membranes in proton exchange membrane cells, water electolyzers, and a variety of other electrochemical cells. Perfluorinated ionomers are very expensive, and it would not be economically feasible to use chitosan-treated perfluorinated ionomers in large-area applications such as aircraft interiors and the like.

Thus, there remains a need for treating with chitosan a fluoropolymer that does not already contain amino-reactive functional groups as polymerized but is activated to contain such groups. Such a process would provide an effective antimicrobial fluoropolymer film or article that can be prepared in a convenient, economical manner and *in situ.*

### SUMMARY OF THE INVENTION

The invention described herein solves the technical problem by first activating fluoropolymers so that they comprise amino-reactive functional groups and then treating them with chitosan to make them antimicrobial.

The invention described herein provides an antimicrobial fluoropolymer film or article comprising a fluoropolymer and a chitosan coating, wherein the fluoropolymer, upon activation, contains amino-reactive functional groups whereby at least one surface of the film or the article has a chitosan concentration sufficient to reduce microbial growth. Also described herein is a process for preparing a fluoropolymer film that is made antimicrobial, the process comprising the steps:
a. providing film or an article comprising a fluoropolymer that does not contain amino-reactive functional groups as polymerized;
b. activating at least one surface of the film or the article to produce an activated film or an activated article;
c. contacting the film or the article with a solution comprising chitosan such that the chitosan concentration of at least one surface of the activated film or the activated article is sufficient to reduce microbial growth;
d. drying the contacted film or contacted article.

Laminated film structures as well as articles comprising the antimicrobial film are also described herein.

### DETAILED DESCRIPTION OF THE INVENTION

The invention described herein is directed to antimicrobial polymeric material and articles of this material as well as to a method of making these. Material and articles prepared by these methods of the invention exhibit antimicrobial functionality wherein microbial growth is reduced as the article is commonly used.

In the context of this disclosure, a number of terms are used and have the following definitions:
As used herein, "antimicrobial" means bactericidal, fungicidal, and antiviral as commonly known in the art.
As used herein, "reduce microbial growth" means a 99.9% kill of the bacteria in 24 hours as measured by the Shake Flask test described below and as commonly used to measure antimicrobial functionality, which indicates a minimum requirement of a 3-log reduction in bacterial growth.
As used herein, "amino-reactive groups" refers to chemical functionalities that readily undergo chemical reaction with an NH₂ group. Examples include positively charged species such as metal ions, anhydrides, carboxylic acids, isocyanates, epoxides, acid chlorides, and enones.
As used herein, "does not contain amino-reactive functional groups as polymerized" indicates that the polymer, as (co)polymerized, does not present a surface that contains amino-reactive functional groups in sufficient quantity so that the amino groups of the chitosan agent chemically react with the substrate's surface and thereby form a stable coating with a surface concentration of chitosan sufficient to reduce microbial growth, as the sufficiency term is defined above.
Additionally, "a polymer comprises amino-reactive functional groups only after becoming activated" or "the polymer does not contain amino-reactive functional groups as polymerized" indicates that additional chemical or physical modification or priming of the substrate's surface is required to produce amino-reactive functional groups (as defined above) to chemically react with the chitosan to form a durable coating.
As used herein, "activation" or "priming" refers to subjecting a polymer surface to chemical or physical modification to form functional groups of hydroxyl, carboxyl, carbonyl, or ethylenically unsaturated radicals on the surface.
As used herein, "chitosan solution" refers to a solution containing at least one type of chitosan-based moiety, including chitosan, chitosan salts (for example, the reaction product of chitosan with an acid solution to give a water-soluble salt), and other chitosan derivatives.
As used herein, "chemically reacts" refers to the formation of ionic or covalent bonds between the chitosan-based moiety and the substrate.

Where a range of numerical values is recited herein, unless otherwise stated, the range is intended to include the endpoints thereof, and all integers and fractions within the range. It is not intended that the scope of the invention be limited to the specific values recited when defining a range.

### Fluoropolymer Film

The present invention is applicable to a wide range of fluoropolymer films such as those prepared from polymers and copolymers of trifluoroethylene, hexafluoropropylene, monochlorotrifluoroethylene, dichlorodifluoroethylene, tetrafluoroethylene, vinylidene fluoride, vinyl fluoride, among others.

For example, the fluoropolymer may be a fluorinated ethylene/propylene copolymer (commonly known as FEP resins); a copolymer of ethylene and chlorotrifluoroethylene, a copolymer of ethylene and tetrafluoroethylene ("ETFE"), a perfluorovinyl ether/tetrafluoroethylene copolymer ("PFA"), a vinylidene fluoride/hexafluoropropylene copolymer, vinylidene fluoride/perfluoro (alkyl vinyl ether) dipolymers and terpolymers with tetrafluoroethylene, polyvinylidene fluoride homopolymer (PVDF) or a blend of polyvinylidene fluoride with an acrylic polymer, or polyvinyl fluoride homopolymer (PVF), among others.

The method of manufacturing the fluoropolymer film depends on the composition of the specific fluoropolymer. Examples of melt-processible fluoropolymers include but are not limited to ETFE, PFA, and FEP resins. Films of melt processible fluoropolymers are typically prepared by extrusion of the melt through a die. See, e.g., Eldridge M. Mount III, "Films, Manufacture" in Encyclopedia of Polymer Science and Technology, 3rd edition, vol. 6, Jacqueline I. Kroschwitz (exec. ed.), John Wiley & Sons, Inc. (2002), 283-305. Cast film or sheet is self-supporting and formed from the extruded melt. Multilayer structures can be formed by coextrusion of multiple melt streams or by extrusion coating a melt stream-onto a preformed web. In blown film processes, the melt is extruded through an annular die into a tube subsequently blown into a bubble. The bubble may be blown immediately from the melt, or the tube may be quenched first, then reheated and blown into film.

The present invention is preferably employed with polyvinyl fluoride (PVF) films. Other preferred films for use in the present invention are made from polyvinylidene fluoride (PVDF) or from a blend of polyvinylidene fluoride (PVDF) and acrylic polymers. These fluoropolymer films can be made from fluid compositions that are either (1) solutions or (2) dispersions of fluoropolymer. Films are formed from such solutions or dispersions of fluoropolymer by casting or extrusion processes.

Typical solutions or dispersions for polyvinylidene fluoride or copolymers of vinylidene fluoride are prepared using solvents which have boiling points high enough to avoid bubble formation during the film forming/drying process. The polymer concentration in these solutions or dispersions is adjusted to achieve a workable viscosity of the solution and in general is less than about 25% by weight of the solution. A suitable fluoropolymer film is formed from a blend of polyvinylidene fluoride, or copolymers and terpolymers thereof, and acrylic resin as the principal components as described in U.S. Pat. Nos. 3,524,906; 4,931,324; and 5,707,697.

Using films of polyvinyl fluoride (PVF), suitable films of the present invention can be made from dispersions of the fluoropolymer. The nature and preparation of such dispersions are described in detail in U.S. Pat. Nos. 2,419,008; 2,510,783; and 2,599,300. Suitable PVF dispersions can be formed in, for example, propylene carbonate, N-methyl pyrrolidone, y-butyrolactone, sulfolane, and dimethylacetamide. The concentration of PVF in the dispersion will vary with the particular polymer and the process equipment and the conditions used. In general, the fluoropolymer will comprise from about 30 to about 45% by weight of the dispersion.

If desired, various color and opacity effects can be achieved by incorporating pigments and fillers in the polyvinyl fluoride dispersion during manufacture. Examples of pigments and fillers are metallic oxides, hydroxides, chromates, silicates, sulfides, sulfates, and carbonates, organic dyes and carbon blacks.

Films of polyvinyl fluoride may be formed by extrusion procedures such as those presented in U.S. Pat. Nos. 3,139,470 and 2,953,818, which describe the feeding of polyvinyl fluoride dispersion to a heated extruder connected to a slotted casting hopper. A tough coalesced extrudate of polyvinyl fluoride is extruded continuously in the form of a film containing latent solvent. The film can be merely dried or, alternately, can be heated and stretched in one or more directions while the solvent is volatilized from the film. When stretching is used, oriented film is produced. Alternatively, films of polyvinyl fluoride can be cast from dilute dispersions of the polymer in latent solvent. Cast, multilayer polyvinyl fluoride structures as those described in U.S. Pat. No. 4,877,683 may also be used in place of a single film of PVF.

In fluoropolymer film casting processes, the fluoropolymer is formed into its desired configuration by casting the dispersion onto a support, by using any suitable conventional means, such as spray, roll, knife, curtain, gravure coaters, or any other method that permits applying a substantially uniform film without streaks or other defects. The thickness of the cast dispersion is not critical, so long as the resulting film has sufficient thickness to be self supporting and satisfactorily removable from the substrate onto which the dispersion is cast. In general, a thickness of at least about 0.25 mil (6.4 micrometers) is satisfactory, and thicknesses of up to about 15 mils (381 micrometers) can be made, using the dispersion casting techniques of the present invention.

A wide variety of supports may be used for casting films according to the present invention, depending on the particular polymer and the coalescing conditions. The surface onto which the dispersion is cast should be selected to provide easy removal of the finished film after it is coalesced. While any suitable support can be employed for casting the fluoropolymer dispersion, examples of suitable supports include polymeric films or steel belts. Examples of polymeric films, which may be used as a support, include films comprising polyimides, polyarylates, and polyesters, among others. For applications as the interiors of aircraft or seats for mass transit vehicles, which include buses, rail cars, ferries and the like, textured supports may be used to cast polymeric films so that the cast films provide a matte or textured appearance; see, e.g., U.S. Pat. 6,348,117.

After casting the fluoropolymer dispersion onto the support, the fluoropolymer is then heated to coalesce the fluoropolymer into a film. The conditions used to coalesce the polymer will vary with the polymer used, the thickness of the cast dispersion, among other operating conditions. Typically, when employing a PVF dispersion, oven temperatures of from about 340°F (171 °C) to about 480°F (249°C) can be used to coalesce the film, and temperatures of from about 380°F (193°C) to about 450°F (232°C) have been found particularly satisfactory. These oven temperatures are not representative of the temperatures at which the polymer is treated, which will be lower. After coalescence, the finished film is stripped from the support by using any suitable conventional technique.

### Fluoropolymer Activation

Each surface of the fluoropolymer film, which is to be coated with the chitosan agent, must be activated. That is, the surface must be subjected to chemical or physical modification or priming to form functional groups of hydroxyl, carboxyl, carbonyl, or ethylenically unsaturated radicals on the surface, thereby improving its adherability. The activation can be achieved by exposing the film to a gaseous Lewis acid-e.g., boron trifluoride-or sulfuric acid, or a solution of alkali metal in liquid ammonia, or hot sodium hydroxide. Preferably, exposing one or both surfaces to an open flame while cooling the opposite surface can activate the surface. Subjecting the film to a high frequency, spark discharge such as corona treatment can also activate the film. Corona treatment may be carried out in air or in other atmospheres, for example, acetone-enriched air, as known in the art.

Both oriented and unoriented fluoropolymer films may be used in the invention described herein.

### Chitosan Treating Solution

The film and articles described herein have at least one layer of chitosan reacted thereon. Chitosan is the commonly used name for poly-[1-4]-ß-D-glucosamine. Chitosan is chemically derived from chitin, which is a poly-[1-4]-β-N-acetyl-D-glucosamine, which, in turn, is derived from the cell walls of fungi, the shells of insects and, especially, crustaceans.

The preferred molecular weight of the chitosan is from about 50,000 to about 1,000,000; from about 70,000 to about 80,000 is particularly preferred. It is preferred that the degree of deacetylation of the chitosan is at least 50%; over 90% is' particularly preferred.

Coating a film or an article with chitosan comprises soaking or wetting the article with a chitosan solution. As used herein, "chitosan solution", "chitosan treating solution" and "solution comprising chitosan" refer to a solution containing at least one type of chitosan-based moiety, including chitosan, chitosan salts (for example, the reaction product of chitosan with an acid solution to give a water-soluble salt), and other chitosan derivatives. The chitosan solution is used to treat the surface of an activated fluoropolymer film, activated fluoropolymer surface of a laminated film structure, or the activated fluoropolymer surface of an article comprising a laminated film structure.

The solution comprising the chitosan agent may be aqueous. Solubility is obtained by adding the chitosan to a dilute solution of a water-soluble, organic acid selected from the group consisting of mono-, di- and polycarboxylic acids. This allows the chitosan to react with the acid to form a water-soluble salt. Alternatively, chitosan derivatives, including N- and O-carboxyalkyl chitosan, which are water-soluble, may be used directly in water instead of chitosan salt. The chitosan may also be dissolved in special solvents like dimethylacetamide in the presence of lithium chloride, or in N-methyl-morpholine-N-oxide and such solutions may also be used in the invention described herein.

Typically, the chitosan treating solution is an aqueous acetic acid solution, preferably containing from about 0.5 wt% to about 5 wt% aqueous acetic acid. It is preferred to prepare an aqueous solution containing from about 0.1 wt% to about 3 wt % chitosan and from about 0.5 wt% to about 1.0 wt% acetic acid. It is more preferred to prepare an aqueous solution that contains about 2 wt % chitosan and about 0.75% acetic acid. It is also preferred to prepare an aqueous solution that contains about 2 wt % chitosan and about 1.5 wt% aqueous acetic acid solution. The time of treatment in a batch process is typically 5 to 30 minutes, although in a continuous process it could be as short as seconds. The temperature of the treatment is not critical and is typically in the range of about room temperature to about 90°C.

After treatment with chitosan, the article may be washed, preferably with deionized water. Optionally, the article may then be dried via methods known in the art. Such methods include ambient air drying, oven drying, and air forced drying. An inert atmosphere, such as nitrogen, may be provided in place of air. In a batch process, the articles are preferably oven dried at about 40 to about 90°C for about 12 to about 24 hours. In a continuous process, the articles would preferably be dried at about 60° to about 110° C for about 0.5 to about 2.5 minutes.

Articles prepared by the present methods exhibit antimicrobial properties and are expected to inhibit odor development as well. Said antimicrobial properties may, optionally, be further enhanced by treatment with metal salts. Metal salts useful for the present invention include, for example, zinc sulfate, copper sulfate, silver nitrate, or other water-soluble zinc, copper, and silver salts or mixtures of these. The metal salts are typically applied by dipping, spraying or padding a dilute (0.1 % to 5%) solution of the salt in water onto the article. Alternatively, a solution of the metal salt can be reacted with a chitosan solution to produce a chitosan-metal complex, such as is described in U. S. Pat. App. No. 10/999672.

A method for making a chitosan-silver complex, for example, comprises the steps of:
(a) dissolving 0.25 to 8.0 % by weight chitosan in an acid solution;
(b) adding a solution of a silver salt to the product of step (a);
(c) adding water to the product of step (b), with stirring;
(d) adding a basic solution, whereby the pH of the product of step (c) is raised to pH 8;
(e) filtering the product of step (d);
(f) washing with water the solids obtained in step (e);
(g) washing with acetonitrile the solids obtained in step (f);
(h) drying the solids obtained in step (g) under vacuum; and
(i) optionally, grinding the dried product of step (h) to a fine powder.
A solution of this chitosan-metal complex can then be used to treat the article.

### Chitosan-treated Articles

The chitosan solution can be used to treat the surface of the activated fluoropolymer film, the activated fluoropolymer surface of a laminated film structure, or the activated fluoropolymer surface of an article, which may or not comprise the activated film or laminated film structure. A textured fluoropolymer film with a chitosan coating may be prepared by treating a textured film with chitosan solution, or coating an untextured fluoropolymer film and then mechanically embossing it against embossing plates at an elevated temperature as is known in the art; for example, the embossing would be done at about 300°F to about 350°F (about 149°C to about 177°C). Film structures comprising activated fluoropolymer film may be adhered to a variety of substrates to form a laminated film structure by methods known in the art. Some examples of substrates are fiberglass-reinforced plastic (FRP), metal (e.g., aluminum, steel), cellulosic substrates (e.g., wood), cement, asphalt, melamine composite, aramid (e.g., m-phenylene terephthalamide paper, sheeting, and honeycomb structures), fabrics (e.g., vinyl fabrics and vinyl wall coverings), and thermoplastics.

The use of thermoplastic substrates can produce laminated film structures, particularly suitable for further forming operations. A wide variety of thermoplastic polymers are desirable for use as substrates such as polyolefins, (e.g., polypropylene and polyethylene); polyesters (e.g., polyethylene terephthalate and polybutylene terephthalate); polyamides (e.g., nylon 6, nylon 6,6), polyvinyl chloride, polycarbonates; ABS (acrylonitrile/butadiene/styrene); polystyrene; polymethylmethacrylate (PMMA); and high-performance thermoplastics such as polyaryletherketones, polyethersulfones, polyetherimides, and liquid crystalline polymers.

A textured fluoropolymer film with a chitosan coating could be prepared by treating a textured film with chitosan solution, or coating an untextured fluoropolymer film and then mechanically embossing it against embossing plates at an elevated temperature as is known in the art. For PVF, for example, the embossing would be done at about 300°F to about 350°F (about 149°C to about 177°C).

Film structures and laminated film structures described herein can be formed into shaped parts or articles by methods well known in the art, such as form-in-place molding, differential vacuum forming, insert injection molding. Such film structures can be thermoformed by placing a flat film structure into an injection mold and injecting molten plastic behind the film causing the film structure to take the shape of the injection mold (form-in-place molding). Alternatively, laminated film structures can be thermoformed into shells and used in insert injection molding processes where molten plastic resin is introduced behind the shell. FRP techniques (fiber glass reinforced panel) are also suitable. Alternatively, thick film structures, e.g., 50 mils (1.7 mm) or greater can be made. These thick sheets can be thermoformed directly into final parts without requiring further lamination to a supporting thermoplastic substrate or without injection molding.

### Uses of the Antimicrobial Films and Laminated Film Structures

The antimicrobial films, articles and laminated film structures described herein can be applied to surfaces in a wide variety of contexts, particularly in vehicles of mass transportation, including airplanes, buses, subway cars, railway cars, trams, ferries, vans, commuter trains, etc. Examples of uses of these films, structures and articles in aircraft include, but are not limited to: interior ceiling and sidewall panels, window shades, stow bins, lavatories, galleys, tray tables, personal service units, seating, bulkhead partitions, insulation barriers, moisture barriers, cargo bin liners, and composite noise panels. These can be used as similar surfaces in railroad car, bus, subway car, trolley car, van, and watercraft interiors to lessen the microbial load in an enclosed environment.

The films described herein can be laminated easily to a wide variety of architectural substrates, including metal, wood, cement, asphalt, vinyl, melamine composite, and fabrics. Examples of architectural features that would benefit from having antimicrobial films, laminates and articles incorporated therein include, but are not limited to: wall coverings, ceiling and acoustical tiles, bagging film for thermal or acoustic materials, fiberglass-reinforced plastic panels, metal building panels; conformable building panels; and flexible laminates for air-inflated structures, canopies, awnings, and stadium domes.

The films, laminated film structures or articles described herein may be treated before, after or at any time during its manufacture with chitosan or a chitosan agent in order to make it antimicrobial. That is, the present film, film structure, or article may be fashioned integrally into a vehicle of mass transportation or architectural context at the time of vehicle or context formation and may either already possess antimicrobial activity or acquire it after integration. Further, the present film, film structure or article may be inserted or added to such a vehicle or context subsequent to their formation and may either already possess antimicrobial activity or acquire it after insertion. This flexibility as to when the films, laminated film structures or articles may acquire antimicrobial activity is due to the fact that they can be activated and contacted with chitosan *in situ* and need not be integrated or inserted already possessing antimicrobial activity. The performance of activation and contacting with chitosan *in situ* is limited primarily by the need to physically contact the surface to be made antimicrobial.

Chitosan-treated films, laminated film structures and articles may be reactivated after their initial activation to enhance their antimicrobial quality. That is, reactivation may occur *in situ* within, on or in the mass transit vehicle or architectural context in which the film, laminate structure or article is incorporated. Reactivation results in an increase in antimicrobial activity that may rival that of the initial activation, that is, up to and greater than 99% of the original efficiency in reducing microbial growth. Reactivation may occur on a regular basis, occasionally or as a one-time event and comprises the same processes of activation described above. Whether the chitosan-treated surface will be reactivated by exposure to open flame or to a high frequency, spark discharge depends on its location within the mass transit vehicle or architectural context.

### EXAMPLES

The present invention is further defined in the following Examples. It should be understood that these Examples, while indicating preferred embodiments of the invention, are given by way of illustration only. From the above discussion and these Examples, one skilled in the art can ascertain the essential characteristics of this invention, and without departing from the spirit and scope thereof, can make various changes and modifications of the invention to adapt it to various uses and conditions.

The meaning of abbreviations is as follows: "cfu" means colony forming unit(s), "mL" means milliliter(s), "h" means hour(s), "g" means gram(s), "wt%" means weight percent(age), and "n.d." means not determined.

### Materials and Methods:

The chitosan used in this study was material commercially available under the registered trademark ChitoClear® from Primex Corporation of Norway. The material, gradeTM656, was used as purchased.

The degree of N-deacetylation of the chitosan sample was ascertained by proton and carbon 13 NMR spectroscopy to be over 85%. The molecular weight of the sample was approximately 75,000.

Formula 409® All Purpose Cleaner is a product of The Clorox Company (Pleasanton, California) and was used as received.

Tedlar® PVF TR10BG3film, 1 mil (25 microns) thick, was obtained from E. I. du Pont de Nemours & Co., Inc. (Wilmington, Delaware). This was a biaxially oriented, clear polyvinyl fluoride film, flame treated for adherability.

Wire-wound rods (Gardco Applicator Rods, made by the Paul N. Gardner Company, Inc., Pompano Beach, Florida) were used to coat the chitosan solution onto the PVF film. The theoretical wet thicknesses of the coating come from the thickness of the wire used to wrap the rod. As the wire thickness increases, the gap between the wraps increases. According to the manufacturer, a #6 wire will yield 0.6 mil wet, a #8 will yield 0.8 mil, etc. These thicknesses will vary with viscosities and other factors.

Treated films were tested for antimicrobial properties by the Shake Flask Test for Antimicrobial Testing of Materials using the following procedure:
Inoculate a single, isolated colony from a bacterial or yeast agar plate culture in 15-25 mL of Trypticase Soy Broth (TSB) in a sterile flask.
Incubate at 25-37°C (use optimal growth temperature for specific microbe) for 16-24 h with or without shaking (select appropriate aeration of specific strain). For filamentous fungi, prepare sporulating cultures on agar plates.
Dilute the overnight bacterial or yeast culture into sterile phosphate buffer (see below) at pH 6.0 to 7.0 to obtain approximately 10⁵ colony forming units per mL (cfu/mL). The total volume of phosphate buffer needed will be 50 mL x number of test flasks (including controls). For filamentous fungi, prepare spore suspensions at 10⁵ spores/mL. Spore suspensions are prepared by gently resuspending spores from an agar plate culture that has been flooded with sterile saline or phosphate buffer.
To obtain initial inoculum counts, plate final dilutions (prepared in phosphate buffer) of 10⁻⁴ and 10⁻³ onto Trypticase Soy Agar (TSA) plates in duplicate. Incubate plates at 25-37°C overnight.
Transfer 50 mL of inoculated phosphate buffer into each sterile test flask containing 0.5 g of material to be tested. Also, prepare control flasks of inoculated phosphate buffer and uninoculated phosphate buffer with no test materials.
Place all flasks on a wrist-action shaker and incubate with vigorous shaking at room temperature. Sample all flasks periodically and plate appropriate dilutions onto TSA plates. Incubate at 25 to 37°C for 16 to 48 h and count colonies.
Report colony counts as the number of Colony Forming Units per mL (cfu/mL).
The Δt value (log₁₀ reduction at time t) may be calculated as follows: Δt = C-B, where Δt is the activity constant for contact time t, C is the mean log₁₀ density of microbes in flasks of untreated control materials after X hours of incubation, and B is the mean log₁₀ density of microbes in flasks of treated materials after X hours of incubation. Δt is typically calculated at 4, 6, or 24 hours and may be expressed as Δt_{X}.

### Stock phosphate buffer:

| | |
|---|---|
| Monobasic Potassium Phosphate: | 22.4 g |
| Dibasic Potassium Phosphate: | 56.0 g |
| Deionized Water: | Bring up volume to 1000 mL |

Adjust the pH of the phosphate buffer to pH 6.0 to 7.0 with either NaOH or HCl, filter, sterilize, and store at 4°C until use. The working phosphate buffer is prepared by diluting 1 mL of stock phosphate buffer in 800 mL of sterile deionized water.

### EXAMPLE 1

A 2 wt % solution of grade TM656 chitosan in 0.5 wt% aqueous acetic acid was coated on Tedlar® PVF TR10BG3film using a #6 wire wound rod. No film pretreatment had been used other than the aforementioned flame treatment. The coated film was dried in a convection oven for 30 minutes at 60° C. The appearance of the coated film was indistinguishable from the uncoated film. The coated, dried film was evaluated for antimicrobial efficacy against *E*. *Coli* ATCC 25922, *Staphylococcus aureus* ATCC 6538, and *Klebsiella pneumoniae* ATCC 4352. Results are shown in Tables 1, 2, and 3.

### EXAMPLE 2

A 2 wt% solution of grade TM656 chitosan in 0.5 wt% aqueous acetic acid was coated on Tedlar® PVF TR10BG3 film using a #8 wire wound rod. No film pretreatment had been used other than the aforementioned flame treatment. The coated film was dried in a convection oven for 30 minutes at 60° C. The appearance of the coated film was indistinguishable from the uncoated film. The coated, dried film was evaluated for antimicrobial efficacy against E. *Coli* ATCC 25922, *Staphylococcus aureus* ATCC 6538, and *Klebsiella pneumoniae* ATCC 4352. Results are shown in Tables 1, 2, and 3.

### EXAMPLE 3

A 2 wt% solution of grade TM656 chitosan in 0.5 wt% aqueous acetic acid was coated on Tedlar® PVF TR10BG3film using a #12 wire wound rod. No film pretreatment had been used other than the aforementioned flame treatment. The coated film was dried in a convection oven for 30 minutes at 60° C. The appearance of the coated film was indistinguishable from the uncoated film. The coated, dried film was evaluated for antimicrobial efficacy against *E. Coli* ATCC 25922, *Staphylococcus* aureus ATCC 6538, and *Klebsiella pneumoniae* ATCC 4352. Results are shown in Tables 1, 2, and 3.

### EXAMPLE 4

A section of the treated PVF film treated of Example 1 was subsequently rubbed using 50 double rubs with a cloth that had been wet with methyl ethyl ketone (MEK). Pressure was not specified and was left to the technician's discretion. The film's appearance was unchanged. The film was evaluated for antimicrobial efficacy against *E. Coli* ATCC 25922, *Staphylococcus aureus* ATCC 6538, and *Klebsiella pneumoniae* ATCC 4352. Results are shown in Tables 1, 2, and 3.

### EXAMPLE 5

A section of the treated PVF film treated of Example 1 was subsequently rubbed using 50 double rubs with a cloth that had been wet with Formula 409® All Purpose Cleaner. The film's appearance was unchanged. TCC 25922, *Staphylococcus aureus* ATCC 6538, and *Klebsiella pneumoniae* ATCC 4352. Results are shown in Tables 1, 2, and 3. Pressure was not specified and was left to the technician's discretion. The film was evaluated for antimicrobial efficacy against *E. Coli.*

**Table 1. Effect of chitosan-coated, clear 1-mil Tedlar® PVF film (TR10BG3) on E. Coli ATCC 25922**

| | Cfu/mL at | | | Log₁₀ reduction at | | | |
|---|---|---|---|---|---|---|---|
| Sample | 4h | 6h | 24h | 4h | 6h | 24h | pH at 24h |
| None | 3.84E+05 | 3.57E+05 | 3.87E+05 | 0.00 | 0.03 | -0.01 | 7.42 |
| Uncoated film | 3.77E+05 | 3.21 E+05 | 3.02E+05 | 0.01 | 0.08 | 0.10 | 7.33 |
| Example 1 | 266 | 33 | 0 | 3.16 | 4.06 | 5.58 | 7.32 |
| Example 2 | 163 | 64 | 0 | 3.37 | 3.78 | 5.58 | 7.46 |
| Example 3 | 218 | 64 | 0 | 3.24 | 3.78 | 5.58 | 7.37 |
| Example 4 | 160 | 47 | 1 | 3.38 | 3.91 | 5.58 | 7.29 |
| Example 5 | 1350 | 596 | 3 | 2.45 | 2.81 | 5.10 | 7.24 |

| Table 2. Effect of chitosan-coated, clear 1-mil Tedlar® PVF film (TR10BG3) *Staphylococcus aureus* ATCC 6538 | | | | | | | |
|---|---|---|---|---|---|---|---|
| | Cfu/mL at | | | Log₁₀ reduction at | | | |
| Sample | 4h | 6h | 24h | 4h | 6h | 24h | pH at 24h |
| None | 3.12E+05 | 3.35E+05 | 3.06E+05 | -0.25 | -0.28 | -0.25 | 7.32 |
| Uncoated film | 3.20E+05 | 2.43E+05 | 1.89E+05 | -0.26 | -0.15 | -0.04 | 7.31 |
| Example 1 | 1326 | 240 | 3 | 2.12 | 2.86 | 4.76 | 7.31 |
| Example 2 | 631 | 211 | 14 | 2.44 | 2.92 | 4.09 | 7.33 |
| Example 3 | 1339 | 609 | 13 | 2.11 | 2.46 | 4.13 | 7.29 |
| Example 4 | 163 | 127 | 0 | 3.03 | 3.14 | 5.24 | n.d. |
| Example 5 | 1.17E+05 | 1.18E+05 | 1.93E+03 | 0.17 | 0.17 | 2.77 | 7.28 |

| Table 3. Effect of chitosan-coated, clear 1-mil Tedlar® PVF film (TR10BG3) *Klebsiella pneumoniae* ATCC 4352 | | | | | | | |
|---|---|---|---|---|---|---|---|
| | Cfu/mL at | | | Log₁₀ reduction at | | | |
| Sample | 4h | 6h | 24h | 4h | 6h | 24h | pH at 24h |
| None | 1.07E+06 | 1.14E+06 | 1.16E+06 | 0.03 | 0.00 | 0.00 | 7.31 |
| Uncoated film | 1.05E+06 | 9.79E+05 | 1.38E+06 | 0.04 | 0.07 | -0.08 | 7.28 |
| Example 1 | 5.80E+01 | 0.00E+00 | 0 | 4.30 | 6.06 | 6.06 | 7.36 |
| Example 2 | 4.60E+03 | 9.80E+02 | 0 | 2.40 | 3.07 | 6.06 | 7.29 |
| Example 3 | 4.34E+03 | 7.40E+02 | 0 | 2.42 | 3.19 | 6.06 | 7.34 |
| Example 4 | 1.00E+01 | 0.00E+00 | 0 | 5.06 | 6.06 | 6.06 | n.d. |
| Example 5 | 9.02E+02 | 1.13E+02 | 0 | 3.11 | 4.01 | 6.06 | n.d. |

## Claims

1. A film or an article, each having at least one surface, comprising
an activated fluoropolymer and
a chitosan coating,
wherein the activated fluoropolymer surface, upon activation, comprises amino-reactive functional groups,
whereby the groups chemically react with the chitosan coating such that the chitosan concentration of the at least one surface is sufficient to reduce microbial growth.

2. The article of claim 1 selected from the group consisting of, for a vehicle of mass transportation, an interior ceiling or sidewall pan'el, window shade, stow bin, lavatory, galley, tray tables, personal service unit, seating, bulkhead partition, insulation barrier, moisture barrier, cargo bin liner, or composite noise panel.

3. The article of claim 1 selected from the group consisting of a wall covering, ceiling or acoustical tile, bagging film for thermal or acoustic materials, fiberglass-reinforced plastic panel, metal building panel, conformable building panel, or flexible laminate for an air-inflated structure, canopy, awning, or stadium dome.

4. An article comprising the film of claim 1, wherein the article is selected from the group consisting of, for a vehicle of mass transportation, an interior ceiling or sidewall panel, window shade, stow bin, lavatory, galley, tray tables, personal service unit, seating, bulkhead partition, insulation barrier, moisture barrier, cargo bin liner, or composite noise panel.

5. The article of claim 4, wherein the vehicle of mass transportation is an aircraft, railroad car, bus, subway car, trolley car, van, or watercraft.

6. An article comprising the antimicrobial film of claim 1, wherein the article is selected from the group consisting of a wall covering, ceiling or acoustical tile, bagging film for thermal or acoustic materials, fiberglass-reinforced plastic panel, metal building panel, conformable building panel, or flexible laminate for an air-inflated structure, canopy, awning, or stadium dome.

7. The film or the article of claim 1 wherein the fluoropolymer is selected from the group consisting of fluorinated ethylene/propylene copolymers, ethylene/tetrafluoroethylene copolymers, perfluorovinyl ether/tetrafluoroethylene copolymers, ethylene/chlorotrifluoroethylene copolymers, vinylidene fluoride/hexafluoropropylene copolymers, dipolymers, vinylidene fluoride/perfluoro (alkyl vinyl ether) dipolymers and terpolymers with tetrafluoroethylene, polyvinylidene fluoride or a blend of polyvinylidene fluoride with an acrylic polymer, and polyvinyl fluoride.

8. A laminated film structure comprising the film of claim 1 and a substrate.

9. The laminated film structure of claim 8 wherein the substrate is selected from the group consisting of fiberglass-reinforced plastic, metal, cellulosic substrates, cement, asphalt, melamine composite, aramid, fabrics, vinyl fabrics, vinyl wall coverings, and thermoplastic polymers.

10. The laminated film structure of claim 9 wherein the aramid substrate comprises m-phenylene terephthalamide paper, sheeting, or honeycomb structures.

11. The laminated film structure of claim 10 wherein the thermoplastic polymer is selected from the group consisting of polyolefins, polyesters, polyamides, polyvinyl chloride, polycarbonates, acrylonitrile/butadiene/styrene, polystyrene, polymethylmethacrylate, polyaryletherketones, polyethersulfones, polyetherimides, and liquid crystalline polymers.

12. A process of making film or an article antimicrobial, the process comprising the steps of:
a. providing film or an article comprising at least one surface comprising a fluoropolymer that does not contain amino-reactive functional groups as polymerized;
b. activating the at least one surface of the film or the article to produce activated film or an activated article;
c. contacting the activated film or the activated article with a solution comprising chitosan such that the chitosan concentration of at least one surface of the activated film or the activated article is sufficient to reduce microbial growth;
d. drying the contacted film or contacted article.

13. The process of claim 12, wherein the activated film or the activated article is contacted with a solution comprising a complex of chitosan and a metal salt

14. The process of claim 13, wherein the metal salt is selected from the group consisting of zinc sulfate, copper sulfate, silver nitrate, any water-soluble salt of copper, any water-soluble salt of zinc, any water-soluble salt of silver and mixtures of these.

15. The process of claim 13, wherein the method of making a complex of chitosan and a metal salt comprises the steps of:
a. dissolving 0.25 to 8.0 % by weight chitosan in an acid solution;
b. adding a solution of a silver salt to the product of step a;
c. adding water to the product of step b with stirring;
d. adding a basic solution, whereby the pH of the product of step c is raised to 8;
e. filtering the product of step d;
f. washing with water the product obtained in step e;
g. washing with acetonitrile the solids obtained in step f;
h. drying the solids obtained in step g under vacuum; and
i. optionally, grinding the dried product of step h to a fine powder.

16. The process of claim 12, wherein the molecular weight of the chitosan is in the range of from about 50,000 to about 1,000,000 and the degree of deacetylation of the chitosan is at least 50%.

17. The process of claim 12, wherein the molecular weight of the chitosan is in the range of from about 60,000 to about 80,000 and the degree of deacetylation of the chitosan is at least 85%.

18. A process of reactivating the film or the article of claim 1, comprising the steps of:
a. activating at least one surface of the film or the article to produce activated film or an activated article;
b. contacting the activated film or the activated article with a solution comprising chitosan such that the chitosan concentration of at least one surface of the activated film or the activated article is sufficient to reduce microbial growth;
c. drying the contacted film or the contacted article; and
d. optionally, repeating steps b through d.

## Patentansprüche

1. Folie oder ein Artikel, die jeweils mindestens eine Oberfläche aufweisen, umfassend:
ein aktiviertes Fluorpolymer und
eine Chitosanbeschichtung,
worin die aktivierte Fluorpolymeroberfläche, bei Aktivierung, Amino-reaktive funktionelle Gruppen umfasst,
wobei die Gruppen chemisch mit der Chitosanbeschichtung dergestalt reagieren, dass die Chitosankonzentration der mindestens einen Oberfläche zur Reduktion des mikrobiellen Wachstums ausreicht.

2. Artikel nach Anspruch 1, der aus der Gruppe ausgewählt ist, bestehend, für ein Massenbeförderungsmittel, aus einer Innendecke oder einer Seitenwandplatte, einem Rollo, einem Staubehälter, einer Toilette, einer Küche, Tabletttischen, einer Passagierversorgungseinheit (Personal Service Unit), Sitzmöbeln, einer Schottwand, einer Isolationsbarriere, einer Feuchtigkeitsbarriere, einer Cargobehälter-Auskleidung oder einer Lärmschutz-Verbundplatte.

3. Artikel nach Anspruch 1, der aus der Gruppe ausgewählt ist, bestehend aus einer Wandbedeckung, einer Decken- oder Dämmfliese, einem Bagging-Film (Vakuumfolie) für thermische oder akustische Materialien, einer Glasfaser-verstärkten Kunststoffplatte, einer Metallbauplatte, einer formgerechten Bauplatte oder einem flexiblen Laminat für eine Tragluftkonstruktion, ein Vordach, eine Markise oder eine Stadionkuppel.

4. Artikel, umfassend die Folie nach Anspruch 1, worin der Artikel aus der Gruppe ausgewählt ist, bestehend, für ein Massenbeförderungsmittel, aus einer Innendecke oder einer Seitenwandplatte, einem Rollo, einem Staubehälter, einer Toilette, einer Küche, Tabletttischen, einer Passagierversorgungseinheit, Sitzmöbeln, einer Schottwand, einer Isolationsbarriere, einer Feuchtigkeitsbarriere, einer Cargobehälter-Auskleidung oder einer Lärmschutz-Verbundplatte.

5. Artikel nach Anspruch 4, worin das Massenbeförderungsmittel ein Flugzeug, einen Eisenbahnwaggon, einen Bus, einen U-Bahnwagen, einen Triebwagen, ein Kastenfahrzeug oder ein Wasserfahrzeug darstellt.

6. Artikel, umfassend die antimikrobielle Folie nach Anspruch 1, worin der Artikel aus der Gruppe ausgewählt ist, bestehend aus einer Wandbedeckung, einer Decken- oder Dämmfliese, einem Bagging-Film (Vakuumfolie) für thermische oder akustische Materialien, einer Glasfaser-verstärkten Kunststoffplatte, einer Metallbauplatte, einer formgerechten Bauplatte oder einem flexiblen Laminat für eine Tragluftkonstruktion, ein Vordach, eine Markise oder eine Stadionkuppel.

7. Folie oder Artikel nach Anspruch 1, worin das Fluorpolymer aus der Gruppe ausgewählt ist, bestehend aus fluorierten Ethylen/Propylen-Copolymeren, Ethylen/Tetrafluorethylen-Copolymeren, Perfluorvinylether/Tetrafluorethylen-Copolymeren, Ethylen/Chlortrifluorethylen-Copolymeren, Vinylidenfluorid/Hexafluorpropylen-Copolymeren, Dipolymeren, Vinylidenfluorid/Perfluor(alkylvinylether)-Dipolymeren und -Terpolymeren mit Tetrafluorethylen, Polyvinylidenfluorid oder einer Mischung aus Polyvinylidenfluorid mit einem Acrylpolymer, und Polyvinylfluorid.

8. Laminierte Folienstruktur, umfassend die Folie nach Anspruch 1 und ein Substrat.

9. Laminierte Folienstruktur nach Anspruch 8, worin das Substrat aus der Gruppe ausgewählt ist, bestehend aus Glasfaser-verstärktem Kunststoff, Metall, Cellulosesubstraten, Zement, Asphalt, Melamin-Verbundstoff, Aramid, textilen Flächengebilden, Vinylgeweben, Vinyl-Wandbedeckungen und thermoplastischen Polymeren.

10. Laminierte Folienstruktur nach Anspruch 9, worin das Aramidsubstrat Papier, Endlosfolie oder Wabenstrukturen aus m-Phenylenterephthalamid umfasst.

11. Laminierte Folienstruktur nach Anspruch 10, worin das thermoplastische Polymer aus der Gruppe ausgewählt ist, bestehend aus Polyolefinen, Polyestern, Polyamiden, Polyvinylchlorid, Polycarbonaten, Acrylonitril/Butadien/Styrol, Polystyrol, Polymethylmethacrylat, Polyaryletherketonen, Polyethersulfonen, Polyetherimiden und flüssig-kristallinen Polymeren.

12. Verfahren zur Herstellung von einer antimikrobiellen Folie oder einem antimikrobiellen Artikel, wobei das Verfahren die folgenden Schritte umfasst:
a. Bereitstellen einer Folie oder eines Artikels, umfassend mindestens eine Oberfläche, die ein Fluorpolymer umfasst, das keine Amino-reaktiven funktionellen Gruppen wie polymerisiert enthält;
b. Aktivieren der mindestens einen Oberfläche der Folie oder des Artikels zum Herstellen einer aktivierten Folie oder eines aktivierten Artikels;
c. Kontaktieren der aktivierten Folie oder des aktivierten Artikels mit einer Lösung, umfassend Chitosan dergestalt, dass die Chitosankonzentration von mindestens einer Oberfläche der aktivierten Folie oder des aktivierten Artikels zur Reduktion des mikrobiellen Wachstums ausreicht;
d. Trocknen der konktaktierten Folie oder des kontaktierten Artikels.

13. Verfahren nach Anspruch 12, worin die aktivierte Folie oder der aktivierte Artikel mit einer Lösung in Kontakt gebracht wird, die einen Komplex aus Chitosan und einem Metallsalz umfasst.

14. Verfahren nach Anspruch 13, worin das Metallsalz aus der Gruppe ausgewählt ist, bestehend aus Zinksulfat, Kupfersulfat, Silbernitrat, jedwedem wasserlöslichen Kupfersalz, jedwedem wasserlöslichen Zinksalz, jedwedem wasserlöslichen Silbersalz und Gemischen von diesen.

15. Verfahren nach Anspruch 13, worin das Verfahren zum Herstellen eines Komplexes aus Chitosan und einem Metallsalz die folgenden Schritte umfasst:
a. Auflösen von 0,25 bis 8,0 Gew.-% Chitosan in einer sauren Lösung;
b. Zufügen einer Lösung aus einem Silbersalz zu dem Produkt von Schritt a;
c. Zufügen von Wasser zu dem Produkt von Schritt b unter Rühren;
d. Zufügen einer basischen Lösung, wobei der pH des Produkts von Schritt c auf 8 angehoben wird;
e. Filtrieren des Produkts von Schritt d;
f. Waschen des in Schritt e erhaltenen Produkts mit Wasser;
g. Waschen der in Schritt f erhaltenen Feststoffe mit Acetonitril;
h. Trocknen der in Schritt g unter Vakuum erhaltenen Feststoffe; und
i. optional, Zerkleinern des getrockneten Produkts von Schritt h zu einem feinen Pulver.

16. Verfahren nach Anspruch 12, worin das Molekulargewicht des Chitosans im Bereich von ca. 50000 bis ca. 1000000 liegt und der Deacetylierungsgrad des Chitosans mindestens 50 % beträgt.

17. Verfahren nach Anspruch 12, worin das Molekulargewicht des Chitosans im Bereich von ca. 60000 bis ca. 80000 liegt und der Deacetylierungsgrad des Chitosans mindestens 85 % beträgt.

18. Verfahren des Reaktivierens der Folie oder des Artikels nach Anspruch 1, umfassend die Schritte von:
a. Aktiveren von mindestens einer Oberfläche der Folie oder des Artikels zum Herstellen von aktivierter Folie oder eines aktivierten Artikels;
b. Kontaktieren der aktivierten Folie oder des aktivierten Artikels mit einer Lösung, umfassend Chitosan dergestalt, dass die Chitosankonzentration von mindestens einer Oberfläche der aktivierten Folie oder des aktivierten Artikels zur Reduktion des mikrobiellen Wachstums ausreichend ist;
c. Trocknen der kontaktierten Folie oder des kontaktierten Artikels; und
d. optional, Wiederholung der Schritte b bis d.

## Revendications

1. Film ou article, ayant chacun au moins une surface, comprenant
un fluoropolymère activé et
un revêtement de chitosane,
dans lequel la surface de fluoropolymère activé, lors de l'activation, comprend des groupements fonctionnels amino-réactifs,
dans lequel les groupements réagissent chimiquement avec le revêtement de chitosane de sorte que la concentration en chitosane de la au moins une surface soit suffisante pour réduire la croissance microbienne.

2. Article selon la revendication 1, sélectionné dans le groupe constitué, pour un véhicule de transport en commun, d'un panneau de plafond intérieur ou de paroi latérale, d'un écran pour fenêtre, d'un casier de rangement, de toilettes, d'une cuisine, de tablettes, d'une unité de services personnels, de sièges, d'une cloison de séparation, d'une barrière d'isolement, d'une barrière anti-humidité, d'un chemisage de coffre de chargement ou d'un panneau antibruit composite.

3. Article selon la revendication 1, sélectionné dans le groupe constitué d'un revêtement de paroi, d'un plafond ou d'une tuile acoustique, d'un film d'ensachage pour matériaux thermiques ou acoustiques, d'un panneau en plastique renforcé aux fibres de verre, d'un panneau de construction de métal, d'un panneau de construction conforme, ou d'un laminé flexible pour une structure gonflée à l'air, un auvent, des stores ou un dôme de stade.

4. Article comprenant le film de la revendication 1, dans lequel l'article est sélectionné dans le groupe constitué, pour un véhicule de transport en commun, d'un panneau de plafond intérieur ou de paroi latérale, d'un écran pour fenêtre, d'un casier de rangement, de toilettes, d'une cuisine, de tablettes, d'une unité de service personnel, de sièges, d'une cloison de séparation, d'une barrière d'isolement, d'une barrière anti-humidité, d'un chemisage de coffre de chargement ou d'un panneau antibruit composite.

5. Article selon la revendication 4, dans lequel le véhicule de transport en commun est un aéronef, une voiture de chemins de fer, un bus, une voiture de métro, un tramway, une camionnette ou un bateau.

6. Article comprenant le film antimicrobien de la revendication 1, dans lequel l'article est sélectionné dans le groupe constitué d'un revêtement de paroi, d'un plafond ou d'une tuile acoustique, d'un film d'ensachage pour matériaux thermiques ou acoustiques, d'un panneau en plastique renforcé aux fibres de verre, d'un panneau de construction de métal, d'un panneau de construction conforme ou d'un stratifié flexible pour une structure gonflée à l'air, un auvent, des stores ou un dôme de stade.

7. Film ou article selon la revendication 1, dans lequel le fluoropolymère est sélectionné dans le groupe constitué des composés suivants : copolymères d'éthylène/propylène fluorés, copolymères d'éthylène/tétrafluoroéthylène, copolymères d'éther perfluorovinylique/tétrafluoroéthylène, copolymères d'éthylène/chlorotrifluoroéthylène, copolymères de fluorure de vinylidène/hexafluoropropylène, dipolymères, dipolymères de fluorure de vinylidène/perfluoro(alkylvinyléther) et terpolymères avec du tétrafluoroéthylène, du poly(fluorure de vinylidène) ou un mélange de poly(fluorure de vinylidène) avec un polymère acrylique, et le poly(fluorure de vinyle).

8. Structure de film stratifiée, comprenant le film de la revendication 1 et un substrat.

9. Structure de film stratifiée selon la revendication 8, dans laquelle le substrat est choisi dans le groupe constitué de plastique renforcé aux fibres de verre, de métal, de substrats cellulosiques, de ciment, d'asphalte, de composite de mélamine, d'aramide, de tissus, de tissus de vinyle, de revêtements de parois en vinyle et de polymères thermoplastiques.

10. Structure de film stratifiée selon la revendication 9, dans laquelle le substrat d'aramide comprend du papier, des feuilles ou des structures en nid d'abeille de téréphtalamide de m-phénylène.

11. Structure de film stratifiée selon la revendication 10, dans laquelle le polymère thermoplastique est sélectionné dans le groupe constitué des polyoléfines, des polyesters, des polyamides, du poly(chlorure de vinyle), des polycarbonates, d'acrylonitrile/butadiène/styrène, de polystyrène, de poly(méthacrylate de méthyle), de polyaryl-éthercétones, de polyéthersulfones, de polyétherimides et de polymères à cristaux liquides.

12. Procédé de fabrication d'un film ou d'un article antimicrobien, le procédé comprenant les étapes suivantes :
a. on met en oeuvre un film ou un article comprenant au moins une surface comprenant un fluoropolymère qui ne contient pas de groupements fonctionnels amino-réactifs tels que polymérisés ;
b. on active la au moins une surface du film ou de l'article pour produire un film activé ou un article activé ;
c. on met en contact le film activé ou l'article activé avec une solution comprenant du chitosane de sorte que la concentration en chitosane d'au moins une surface du film activé ou de l'article activé soit suffisante pour réduire la croissance microbienne ; et
d. on fait sécher le film mis en contact ou l'article mis en contact.

13. Procédé selon la revendication 12, dans lequel le film activé ou l'article activé est mis en contact avec une solution comprenant un complexe de chitosane et un sel de métal.

14. Procédé selon la revendication 13, dans lequel le sel de métal est sélectionné dans le groupe constitué du sulfate de zinc, du sulfate de cuivre, du nitrate d'argent, de n'importe quel sel de cuivre soluble dans l'eau, de n'importe quel sel de zinc soluble dans l'eau, de n'importe quel sel d'argent soluble dans l'eau et de leurs mélanges.

15. Procédé selon la revendication 13, dans lequel le procédé de formation d'un complexe de chitosane et d'un sel de métal comprend les étapes suivantes :
a. on dissout 0,25 à 8,0% en poids de chitosane dans une solution acide ;
b. on ajoute une solution de sel d'argent au produit de l'étape a ;
c. on ajoute de l'eau au produit de l'étape b en agitant ;
d. on ajoute une solution basique, de sorte que le pH du produit de l'étape c s'élève à 8 ;
e. on filtre le produit de l'étape d ;
f. on lave à l'eau le produit obtenu à l'étape e ;
g. on lave à l'acétonitrile les solides obtenus à l'étape f ;
h. on sèche les solides obtenus à l'étape g sous vide ; et
i. éventuellement, on broie le produit séché de l'étape h en poudre fine.

16. Procédé selon la revendication 12, dans lequel le poids moléculaire du chitosane se situe dans la plage d'environ 50 000 à environ 1 000 000 et le degré de désacétylation du chitosane est d'au moins 50%.

17. Procédé selon la revendication 12, dans lequel le poids moléculaire du chitosane se situe dans la plage d'environ 60 000 à environ 80 000 et le degré de désacétylation du chitosane est d'au moins 85%.

18. Procédé de réactivation du film ou de l'article selon la revendication 1, comprenant les étapes suivantes :
a. on active au moins une surface du film ou de l'article pour produire un film activé ou un article activé ;
b. on met en contact le film activé ou l'article activé avec une solution comprenant du chitosane de sorte que la concentration en chitosane d'au moins une surface du film activé ou de l'article activé soit suffisante pour réduire la croissance microbienne ;
c. on sèche le film mis en contact ou l'article mis en contact ; et
d. éventuellement, on répète les étapes b à d.
